# EUROPEAN PATENT APPLICATION

(11) **EP 3 791 950 A1**
(43) Date of publication of application: **17.03.2021**
(21) Application number: 19020524.5
(22) Date of filing: 11.09.2019
(51) Int. Cl.: B01D 53/04

(54) **SYSTEM FOR DIRECT CARBON DIOXIDE CAPTURE**

(71) Applicant: VITO NV, 2400 Mol (BE)
(72) Inventor: The designation of the inventor has not yet been filed
(74) Representative: Luys, Marie-José A.H.

(57) **Abstract**

The present invention relates to a system for capturing CO₂ from a CO₂ containing gas, wherein the system comprises
- a housing with at least two consecutive active chambers which are separated from each other, wherein each active chamber contains a CO₂ adsorption substrate capable of selectively adsorbing CO₂,
- a first connecting member connecting a CO₂ containing gas capturing device to at least one of the active chambers,
- a second connecting member connecting a CO₂ collector to at least one of the active chambers,
- a controller which is arranged to alternatingly open and close the first connection of the active chambers to the gas supply member and to alternatingly open and close the second connection to the CO₂ collector in such a way that an active chamber that is connected to the gas supply member is disconnected from the CO₂ collector and at least one of the active chambers is connected to the CO₂ collector.

## Description

The present invention relates to a system for capturing carbon dioxide from a carbon dioxide containing gas.

The direct capture of CO₂ from the atmosphere, referred to as direct air capture (DAC), is one of a wide variety of methods of mitigating anthropogenic greenhouse gas emissions. A wide variety of technologies have been developed for the conversion of CO₂ into functional compounds and synthetic fuels.

The direct capture of CO₂ from the atmosphere presents several advantages : the atmosphere is a non-fossil, location-independent CO₂ source, DAC can address CO₂ emissions from the past, DAC systems do not require a direct attachment to the CO₂ emission source and can address the emissions of various sources such as transport, industry, occurring at various and widespread geographic locations. These emission sources account for a large portion of the worldwide greenhouse gas emissions and can currently not be captured at the site of emission in an economically feasible way. The thus captured CO₂ is suitable for direct conversion into functional compounds.

Several DAC methods have recently been developed based on various technological approaches.

WO2014170184 discloses a gas separation unit with which carbon dioxide may be separated from the remainder of a carbon dioxide containing gas such as air. The gas separation unit is suitable for use in a cyclic batch-wise adsorption/desorption process. Particulate sorbent material is arranged in at least two stacked layers of the unit. Each layer comprises two sheets of a flexible fabric material which is gas permeable but impermeable to the loose particulate sorbent material. The sheets are arranged essentially parallel. Thereby they define an inlet and an outlet face of the layer and are enclosing a cavity in which the particulate sorbent material is located. The unit has a gas inlet and outlet manifold, the gas pathway between the inflow and the outflow is confined to pass through at least one of the layers. The layers are arranged such that the inflow first passes through the inlet face, further through the particular sorbent material in the cavity of the respective layer, to exit the respective layer through the outlet face. The layers are arranged on the one hand such that inlet faces of adjacent layers face each other to thereby enclose gas inlet channels and on the other hand such that outlet faces are facing each other to thereby enclose gas outlet channels.

WO2017017102 to Vito NV discloses a mobile system for capturing carbon dioxide from ambient air, comprising
- a CO₂ trapping structure with a porous member;
- an air conducting structure for forcing the ambient air through the CO₂ trapping structure, wherein the CO₂ trapping structure is removably positioned with respect to the air conducting structure ;
- an environment configured for receiving the CO2 trapping structure and
- means for moving the CO₂ trapping structure to an environment, which may be heated and which may be put at a reduced pressure so as to release the carbon dioxide from the CO₂ trapping structure.

Furthermore, means may be provided for returning the CO₂ trapping structure to the air conducting structure, so that the CO₂ trapping structure may be recycled for binding carbon dioxide from ambient air. Air may be supplied using an air conducting structure such as a natural draft cooling tower, a fan assisted natural draft cooling tower, or a ventilator. The system disclosed in WO2017017102 may however only be operated batch-wise, as the CO₂ trapping structure is either available for CO₂ trapping or subjected to recycling.

WO2015103401 to Eisenberger et. al discloses a system for removing carbon dioxide from a carbon dioxide containing gas mixture, wherein two groups of carbon dioxide removal structures are provided. Each removal structure within each group comprises a porous solid substrate supported on the structure, and a sorbent capable of adsorbing carbon dioxide. Each group of removal structures is moved along an endless loop or a closed curve while being exposed to a stream of the gas mixture. At one location along each of the endless loops for each group of removal structures, a regeneration box is provided. When the sorbent is moved from the loop into the regeneration box, carbon dioxide is stripped from the sorbent at a temperature usually below 130°C and captured, and the sorbent is regenerated. Regeneration may be achieved by supplying process heat steam into the regeneration box, after the atmospheric pressure in the regeneration box has been reduced, to strip off the CO₂, and passing the stripped CO₂ from the regeneration box into a CO2 collection chamber. The number of removal structures generally varies between 5 and 10 for one regeneration box, but this ratio is generally determined by the ratio of the adsorption time for removing CO₂ from the gas mixture to a certain level, to the regeneration time for stripping CO₂ from the sorbent on the porous substrate to a certain level.

The system disclosed in WO2015103401 may be operated in a continuous-like way, but presents the disadvantage that the presence of a large number of removal structure represents a high cost.. Besides this, moving the CO₂ capturing structure from the loop into the regeneration box and back is time consuming and complicates the system.

There is thus a need to a cost efficient system which permits capturing of CO₂ from a CO₂ containing gas into a CO₂ capturing structure and regeneration of the CO₂ capturing structure in a continuous-like operation.

The present invention therefore aims at providing a cost efficient system which permits capturing of CO₂ from a CO₂ containing gas, in particular from ambient air, by a CO₂ adsorption structure and regeneration of the adsorption structure through CO₂ release in a continuous-like operation.

This is achieved according to the present invention with a system showing the technical features of the characterizing portion of the first claim.

Thereto, the present invention relates to a system for capturing CO₂ from a CO₂ containing gas, wherein the system comprises
- a housing with at least two consecutive active chambers which are separated from each other, wherein each active chamber contains a CO₂ adsorption substrate capable of selectively adsorbing CO₂,
- a first connecting member for connecting a CO₂ containing gas capturing device to at least one of the active chambers, so that at least part of the CO₂ contained in the gas supplied to the active chamber by the gas capturing device may be adsorbed by the CO₂ adsorption substrate present in the active chamber,
- a second connecting member for connecting a CO₂ collector to at least one of the active chambers, for collecting at least part of the CO₂ that has been desorbed from the CO₂ adsorption substrate contained in the at least one active chamber,
- a controller which is arranged to alternatingly open or close the first connection of the active chambers to the gas supply member and to alternatingly open or close the second connection to the CO₂ collector in such a way that an active chamber connected to the gas supply member is disconnected from the CO₂ collector and at least one of the remaining active chambers is connected to the CO₂ collector.

The CO₂ capturing system of the present invention is conceived as an exchangeable device, suitable for being connected to any type of device or installation in which CO₂ containing gas is generated. Because of the presence of the connecting members, the CO₂ capturing system of this invention may not only be used in dedicated new built systems, but it is also suitable for use with existing CO₂ generating installations, for example air conditioning or air circulating air devices, off gas lines or gas exhaust installations of industrial production plants, etc.

The presence of at least two solid CO₂ adsorption substrates, permits operating the device in a continuous-like way, wherein one adsorption substrate is always available for CO₂ adsorption and one substrate is available for CO₂ desorption and regeneration. As a result, in the system of this invention CO₂ adsorption will always be alternated with substrate regeneration, and CO₂ adsorption and substrate regeneration may be carried out simultaneously.

It shall be clear that the skilled person may adapt the number of solid CO₂ adsorption substrates in the system taking into account the ratio of (a) the time needed to achieve a certain loading of the adsorption substrate with CO₂, relative to (b) the time needed to achieve a certain degree of desorption of the adsorbed CO₂ from the substrate. Depending on the nature of the adsorbent, the time needed to achieve a certain loading of the adsorption substrate with CO₂ may be the same as the time needed to achieve desorption of the adsorbed CO₂, or the time needed to achieve a certain loading of the adsorption substrate with CO₂ may be longer than the time needed to achieve desorption of the adsorbed CO₂. In the latter case where adsorption takes longer, more than two active chambers may be provided and the number of active chambers may be determined by the ratio of the time needed to achieve a certain loading of the adsorption structure with CO₂ relative to the time needed to achieve a certain degree of desorption of the adsorbed CO₂ from the structure.

CO₂ may be collected from the substrate in a high purity, which is such that the CO₂ is suitable for direct conversion into functional products without requiring additional purification.

For cost reasons, the system of the present invention will preferably not contain more than six active chambers with a CO₂ adsorption substrate, preferably the system of this invention contains five active chambers, more preferably the system of this invention contains four active chambers, most preferably three, in particular two.

These numbers namely represent the main steps occurring in a CO₂ capturing process, in particular
- a step of CO₂ adsorption by the CO₂ adsorption substrate at a temperature that favours CO₂ adsorption,
- a step of heating the substrate from the adsorption temperature to a desorption temperature,
- a step of desorbing the CO₂ from the substrate wherein the substrate is maintained at the desorption temperature and the desorbed CO₂ is collected,
- and a step of cooling the CO₂ adsorption substrate back to the adsorption temperature to permit CO₂ adsorption to take place again.

Usually CO₂ adsorption will take substantially more time than CO₂ desorption. By aligning the number of adsorption substrates contained in the system, to the ratio of (a) the time needed to achieve a certain loading of the adsorption substrate with CO₂, relative to (b) the time needed to achieve a certain degree of desorption of the adsorbed CO₂ from the substrate, CO₂ adsorption and desorption may be equilibrated over time and material costs may be controlled. The material for the adsorption substrate will usually be the cost determining factor, and are therefore to be minimised.

When the nature of the CO₂ adsorption substrate so requires, the number adsorption substrates contained in the system may be increased. In general increasing the number of CO₂ adsorption substrates, will result in increasing the number of CO₂ adsorption substrates available for CO₂ adsorption as generally CO₂ adsorption will take longer than CO₂ desorption. The number of CO₂ adsorption substrates present in the system may be increased to 4, 5 or 6 - with at least two, respectively at least three of the substrates available for CO₂ adsorption.

If a further augmentation of the capacity is envisaged, the system of the present invention may comprise two or more sets of at least a first and second active chamber as described above.

For energy saving reasons, in a preferred embodiment the active chambers are consecutively positioned in a closed loop. This may for example be achieved by positioning the chambers in a housing, or by dividing a housing into the desired number of adjacent chambers. In a preferred embodiment, the closed loop may be moveable, for example it may be rotatable. According to another preferred embodiment, the closed loop or the housing takes a fixed position and is not moveable.

To permit heating or cooling of the active chamber and the CO₂ adsorption substrate present therein and ensuring that the substrate is always maintained at a temperature optimally adapted to the action carried out, i.e. CO₂ adsorption or desorption, each active chamber may preferably be provided with a heat exchange device.

Thereby, the controller is preferably arranged for actuating the heat exchange device of an active chamber for heating the substrate to a CO₂ desorption temperature when the connection of the active chamber to the gas supply member is closed.

In a preferred embodiment, the controller may be arranged for actuating the heat exchange device of a further active chamber for the cooling the substrate from a CO₂ desorption temperature to a CO₂ adsorption temperature after the CO₂ adsorption substrate has been maintained at a desorption temperature for a certain period of time. Cooling may be carried out with the respective chamber connected to or disconnected from the CO₂ collector.

In order to achieve homogeneous heating of the CO₂ adsorption substrate, preferably the heat exchange device extends along at least part of a circumferential wall of each active chamber. Many types of heating devices known to the skilled person may be used, for example those from the group comprising a plurality of channels for circulating a liquid or gaseous heating and/or cooling medium, an electric heating/cooling source, a microwave heating device or a combination of two or more hereof. As an alternative, a heating gas may be flown through the substrate and the active chamber.

In a preferred embodiment, at least part of a circumferential wall of the active chamber may be heat insulated in order to minimize the risk to too large temperature differences between different positions in the CO₂ adsorption substrate, and to optimize energy consumption for heating or cooling the active chambers containing the adsorption substrate.

A cost effective supply of CO₂ can be obtained if the gas supply is connected to an existing ambient air capturing device, preferably one or more selected from the group of a fan, an airconditioning system, a ventilation system, an exhaust gas system of industrial plants wherein CO₂ containing gases are produced This way, ambient air which originates from office buildings, production units a.o. can be used for capturing CO₂ with the purpose of converting it into a useful reactive substrate.

The present invention also relates to a method for capturing carbon dioxide from a carbon dioxide containing gas.

The method of this invention for capturing CO₂ from a CO₂ containing gas, comprises the steps of
- alternatingly supplying the CO₂ containing gas to one of the solid CO₂ adsorption substrates of a system as described above, which adsorption substrate is maintained at a CO₂ adsorption temperature when supplying the CO₂ containing gas and is disconnected from the CO₂ collector,
- wherein at least one of the remaining CO₂ adsorption substrates is maintained at a temperature at which CO₂ desorption takes place and is connected to the CO₂ collector so as to collect CO₂ that has been desorbed from the substrate.

Thereby preferably the CO₂ adsorption substrate consecutive to the substrate maintained at a CO₂ adsorption temperature, is disconnected from the gas supply member, after which gas remaining in the active chamber is removed and the adsorption substrate is heated to a CO₂ desorption temperature.

The present invention also relates to a method for capturing CO₂ from a CO₂ containing gas, by means of the above-described system.

Thereto, the present invention relates to a method for capturing CO₂ from a CO₂ containing gas according to this invention may comprise the following steps :
(1) the CO₂ containing gas is supplied alternatingly to at least one of the CO₂ adsorption substrates of a system as described above. When supplying the CO₂ containing gas, the adsorption substrate is maintained at a CO₂ adsorption temperature and is disconnected from the CO₂ collector,
(2) at least one of the remaining CO₂ adsorption substrates is maintained at a temperature at which CO₂ desorption takes place to cause desorption of adsorbed CO2 from the CO₂ adsorption substrate, and is connected to the CO₂ collector so as to permit collecting CO₂ that has been desorbed from the at least one CO₂ adsorption substrate.

In a preferred embodiment, a CO₂ adsorption substrate present in an active chamber consecutive to the CO₂ adsorption substrate maintained at a CO₂ adsorption temperature is heated to a CO₂ desorption temperature and is subjected to a pressure reduction to evacuate non-adsorbed gas and non-adsorbed CO₂ remaining in the active chamber and CO₂ that has been desorbed from the CO₂ adsorption substrate. Thereby, adsorption substrate may be but must not be disconnected from the gas supply member.

In a further preferred embodiment of this invention, a CO₂ adsorption substrate consecutive to the substrate maintained at the CO₂ desorption temperature is cooled to a CO₂ adsorption temperature, to have the CO₂ adsorption substrate again available and optimized for CO₂ adsorption. Thereby, the adsorption substrate may be disconnected from or may be connected to the gas supply member.

In a further preferred embodiment, the CO₂ containing gas comprises ambient air, or is ambient air.

The present invention is further illustrated in the appending figures and description thereof.
Figure 1a shows an over-all view to an embodiment of the system of this invention, comprising a housing with two sets of 5 chambers. Figure 1b shows a view to the top of the system of fig. 1 a.
Figure 2a shows a view to the side of an alternative embodiment of the system of this invention. Figure 2b shows the system of this invention in perspective.
Figure 3a shows a view to an embodiment of the system of this invention, comprising several housings incorporating at least two active chambers.
Figure 4 shows a scheme illustrating the steps occurring in the method of the present invention.

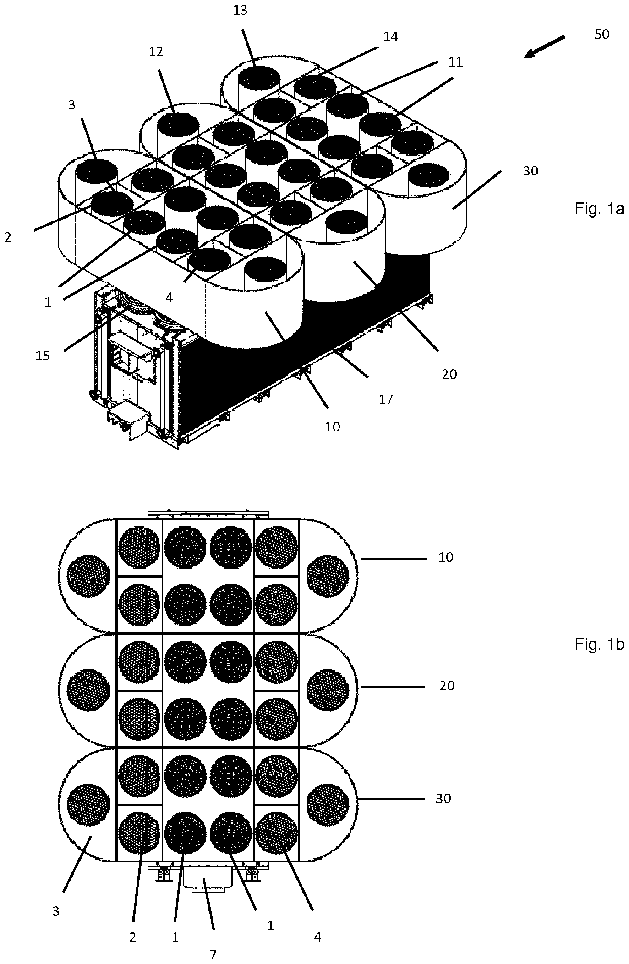

The preferred embodiment of the system 50 for capturing carbon dioxide of the present invention shown in figure 1 comprises a housing 10. The housing comprises at least a first active chamber 1 which houses a first CO₂ adsorption substrate and a consecutive second active chamber 2, which houses a second CO₂ adsorption substrate. The first and second active chamber are separated from each other, preferably the separation 31 is gas tight.

The system of this invention further comprises a first *connecting member* 15 with which a container containing the CO₂ containing gas or a capturing device with which the CO₂ containing gas is captured, may be connected to a gas supply member 17. The gas supply member 17 is arranged to supply the CO₂ containing gas to at least one of the active chambers 1-4 so that at least part of the CO₂ contained in the gas may be adsorbed by the CO₂ adsorption substrate 11-14 present therein. The first connecting member 15 may be reversibly opened and closed, to permit or prevent supplying of gas. The first connecting member 15 is preferably releasably connectible to the gas supply member 17, so that the system 50 of this invention is exchangeable, suitable for use on varying locations and suitable for being used with many sources or devices capable of supplying CO₂ containing gas. This way the system of this invention is suitable for mounting to existing gas supply installations such as ambient air circulation devices, air conditioning devices, industrial exhaust gas devices, etc.

The system of this invention also comprises *a* CO₂ *collector* which is capable of extracting or collecting at least part of the CO₂ that has been desorbed from the CO₂ adsorption substrate 11-14. Many devices known to the skilled person may be used as CO₂ collector, for example a gas tight container connected to the housing, a condenser or CO₂ sublimator, a reactor for converting the CO₂ into a functional component, etc. Preferably the CO₂ collector is releasably connectible to the housing, to permit exchange for example when the collector is full.

A preferred embodiment of this invention relates to a system which also comprises a third active chamber 3 with a third solid CO₂ adsorption substrate 13. A still further preferred embodiment of this invention relates to a system which also contains a fourth active chamber 4 which houses a fourth solid CO₂ adsorption substrate 14. The porous CO₂ adsorption substrate is selected such that it is capable of reversibly absorbing and desorbing CO₂. The CO₂ adsorption substrates 11, 12, 13, 14 contained in respectively the first, second, third and fourth active chamber 1, 2, 3, 4 may be the same or different, but preferably they are the same to facilitate operation of the system and ensure similar CO₂ adsorption and desorption properties throughout the system. Further preferred embodiments relate to systems comprising a fifth and possible a sixth active chamber, respectively containing a fifth and a sixth CO₂ adsorption substrate.

The skilled person may adapt the number of active chambers with CO₂ adsorption substrates present in a housing, taking into account the ratio of the time needed to achieve a certain loading of the adsorption substrate with CO₂ relative to the time needed to achieve a certain degree of desorption from the CO₂ adsorption substrate.

Depending on the nature of the adsorbent, the time needed to achieve a certain loading of the adsorption structure may be the same as the time needed to achieve desorption of the adsorbed amount of CO₂ in which case a 1:1 ratio of CO₂ adsorption substrates involved in CO₂ adsorption and CO₂ desorption may be used. In an alternative embodiment, the time needed to achieve a certain loading of the CO₂ adsorption substrate with CO₂ may be longer than the time needed to achieve desorption of the adsorbed amount of CO₂ to a desired extent In an example the time needed to achieve a certain loading of the CO₂ adsorption substrate with CO₂ may be twice the time needed to achieve CO₂ desorption to a desired extent, in which case preferably the system will preferably contain three active chambers wherein two active chambers may be kept available for CO₂ adsorption and one active chamber may kept available for CO₂ desorption. As a result, the time available for CO₂ adsorption by a CO₂ adsorption substrate may be prolonged as desired.

According to another example the time needed to achieve a certain loading of the CO₂ adsorption substrate may be about three times the time needed to achieve desorption of the adsorbed amount to a desired extent or more, in which case preferably the system will preferably contain four chambers and one active chamber may be involved in CO₂ adsorption and three active chambers may be involved in CO₂ desorption and/or other process steps described below.
It shall be clear to the skilled person that the number of active chambers may be further increased depending on the nature of the CO₂ adsorption substrate.

The shape of the housing 10 and of the active chambers 1 - 4 is not critical to the invention, and they may have any shape considered suitable by the skilled person. The active chambers 1 - 4 may have the same or a different shape, their shape will usually be determined by the shape of the housing 10, 20, 30. The dimensions of the active chambers 1 - 4 may be the same or different, but preferably they are the same in order to permit better controlling of the time made available for CO₂ adsorption and desorption. Typically, a housing and a solid CO₂ adsorption substrate may have a height of one meter up to a few meter, and a cross section of about 50 cm up to about 1 meter. In a preferred embodiment, the dimensions and shape of the active chambers in the flow direction of the gas may be selected such that a desired residence time of the CO₂ containing gas in the substrate in a particular active chamber may be achieved in order to maximize or optimize CO₂ adsorption by the CO₂ adsorption substrate from the CO₂ containing gas.

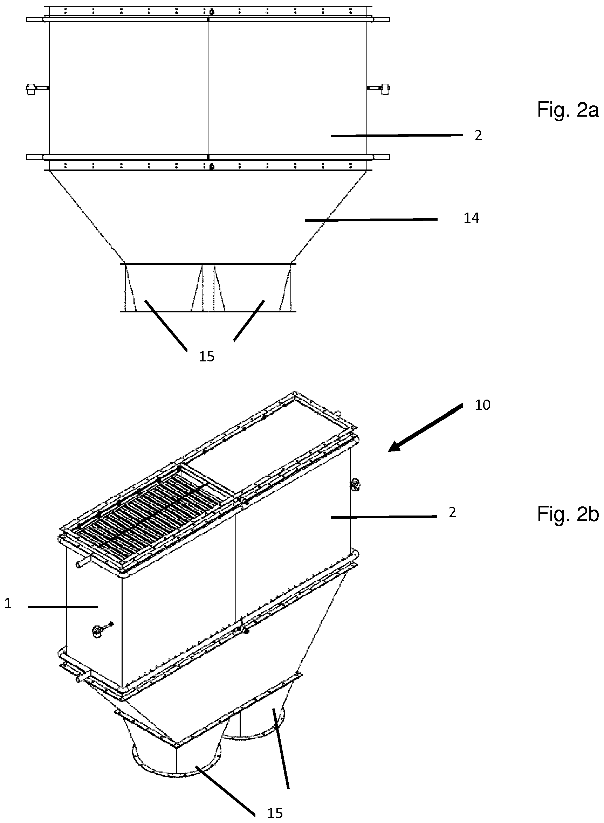

In a preferred embodiment such as the one shown in fig. 1a and 1b, the active chambers are consecutively positioned in the housing in a closed loop, as this facilitates operating the system of this invention in a quasi-continuous manner. A closed loop may for example be achieved by positioning the active chambers according to the edges of a closed geometrical shape, for example a circle, square or rectangle or any other suitable positioning. In a preferred embodiment, the housing 10 is divided into the desired number of chambers, by commonly shared separation walls as is shown in figure 2a and 2b. According to another embodiment, the active chambers are separate from each other.

Although it is preferred that the active chambers have a fixed position because of the size and weight, in an embodiment they may be moveable along the closed loop. In an example the housing is rotatable along an axis that runs parallel to the upright walls of the active chambers.

The system of this invention further comprises *a controller,* which is capable of controlling which CO₂ adsorption substrate or substrates are involved in CO₂ adsorption and which CO₂ adsorption substrate or substrates are involved in CO₂ desorption. Thereto the controller may be arranged to control the temperature of each active chamber and thus the temperature of each CO₂ adsorption substrate. The controller may further be arranged to control the pressure in each of the active chambers. Generally a CO₂ adsorption substrate involved in CO₂ adsorption is not involved in CO₂ desorption.

To that end the controller is arranged to alternatingly connect consecutive active chambers to the gas supply member and to the CO₂ collector in such a way that
- an active chamber connected to the gas supply member 17 is disconnected from the CO₂ collector 20,
- at least one of the remaining active chambers is connected to the CO₂ collector. In an embodiment the remaining active chambers are disconnected from the gas supply member.

According to a preferred embodiment, a single active chamber, two or three active chambers may be connected to the gas supply member, depending on the ratio of the time needed to saturate the CO₂ adsorption substrate to a certain extent, with respect to the time needed to achieve CO₂ desorption to a certain extent. In particular to that end, the controller is arranged to consecutively and alternatingly connect the first, second, third and fourth active chamber 1- 4 to the gas supply member 17 and to connect one of the remaining chambers to the CO₂ collector.

According to a different preferred embodiment, the controller is arranged to alternatingly connect the first, second, third and fourth active chamber to the gas supply member, with at least two consecutive active chambers simultaneously connected to the gas supply member.

In a preferred embodiment each of the active chambers is provided with *a heat exchange device,* and the controller is provided for activating the heat exchange device for cooling, heating or maintaining a desired temperature depending on the position of the active chamber and the CO₂ adsorption substrate present therein. In particular, the controller is arranged for actuating the heat exchange device of an active chamber for cooling the chamber and the CO₂ adsorption substrate present therein to a CO₂ adsorption temperature when the connection of the chamber to the gas supply member is open. The controller is arranged for actuating the heat exchange device of an active chamber for heating the chamber and the CO₂ adsorption substrate present therein to a CO₂ desorption temperature when the connection of the chamber to the gas supply member is closed. Further in particular, the controller is arranged for actuating the heat exchange device of an active chamber and the CO₂ adsorption substrate present therein for cooling towards a CO₂ adsorption temperature after it has been maintained at a desorption temperature for a certain period of time.

Many types of heat exchange devices may be used.

For example cooling may be carried out by flowing a gas having a certain temperature through the active chamber. Thereby the gas may flow through the CO₂ adsorption substrate as well.

According to an alternative embodiment, in stead of or in addition to a flowing gas, a heat exchange device may be provided in or on at least part of a circumferential wall of each active chamber. The heat exchange device may extend along an inner face of the circumferential wall or it may be built into the circumferential wall. Suitable heating devices include those belonging to the group of a plurality of channels for circulating a liquid or gaseous heating and/or cooling medium, an electric heating/cooling source, a microwave heating device or a combination of two or more hereof.

Temperature control within the active chambers may be achieved in various ways. Suitable ways of heating an active chamber include the use of a hot water supply to the heat exchange device for example hot water originating from cooling towers, a hot air supply for example hot air originating from air circulation or air conditioning devices, an electric heating source, a microwave heating device, a device containing waste heat or a combination of two or more hereof. Coupling of the heating device to a hot water or a hot gas or hot air supply provides a cost effective heating, in particular when coupling to the hot air outlet or the warm liquid circuit of an airconditioning system. Such heating systems may show a moderate heating rate. In case fast heating is envisaged, the use of electric or microwave heating may be preferred.

As an alternative or additionally to using a heat exchange device, a gas may be flown through the active chamber and the substrate present therein, wherein gas is flown towards and through the substrate in which desorption is to take place. Generally a gas will be used with a CO₂ content that is lower than that of the substrate contained in the second chamber.

In stead of or in addition to a heat exchange device, the system of this invention may comprise a *pressure reducing device* for subjecting the active chamber and the CO₂ adsorption substrate present therein to a reduced pressure in order to stimulate CO₂ desorption. Usually this will result in a cooling of the CO₂ adsorption substrate. A suitable pressure reducing device is a vacuum pump. The degree to which the pressure is reduced in an active chamber may vary within some ranges, and may for example depend on the energy needed to achieve CO₂ desorption from the CO₂ adsorption substrate. It shall be clear to the skilled person that the energy needed to achieve CO₂ desorption from the CO₂ adsorption substrate may increase with increasing degree of CO₂ removal, since more strongly adsorbed CO2 will require more energy to achieve desorption. Suitable pressure reducing devices include vacuum pumps capable of providing a vacuum of 10⁴ to 3 x 10³ Pa, or from 3×10³ to 1×10⁻¹ Pa or from 1×10⁻¹ to 1×10⁻⁷ Pa.

Another suitable way to achieve CO₂ desorption from the CO₂ adsorption substrate includes a purge step during which a gas stream depleted in CO₂ is passed counter-currently through the CO₂ adsorption substrate, thereby reducing the CO₂ partial pressure in the active chamber which causes adsorbed CO₂ to be desorbed. The non-adsorbed gas may be used to purge the CO₂ adsorption substrate since this gas is usually quite depleted in CO₂.

In a preferred embodiment, CO₂ adsorption will usually be carried out with the active chamber and the adsorption substrate involved at a lower temperature and a higher pressure relative to the temperature and pressure used in the course of CO₂ desorption. Likewise CO₂ desorption will usually be carried out with the active chamber and the adsorption substrate involved at a higher temperature and a lower pressure relative to the temperature and pressure used in the course of CO₂ adsorption.

Within the scope of this invention many types of *CO₂ adsorption substrates* known to the skilled person may be used.

Suitable CO₂ adsorption substrates include solid adsorption substrates, which are porous and are able to adsorb CO₂ in their pore system. Examples of suitable solid CO₂ adsorption substrates include clay minerals, zeolites, active carbon, porous Al₂O₃, silica, etc. Other suitable CO₂ adsorption substrates include membranes, resins etc. The substrate may for example take the form of particles, grains or pellets which may be stacked in the chamber in random manner or in an organized manner, or which may be carried on a support structure, for example a plurality of grids positioned on top of each other in height direction of the chamber, a self-standing support structure for example a monolith, a honey-comb or any other self-standing support structure considered suitable by the skilled person. The inventors have observed that usually adsorption of CO₂ from the gas supplied, takes longer than desorption of the CO₂ that has been adsorbed.

Other CO₂ adsorption substrates suitable for use with this invention include liquids as well as liquids capable of reacting with CO₂ and of releasing the CO₂ again upon heating.

A preferred embodiment of this invention relates to an active chamber in which a plurality of grids are positioned spaced from each other in height direction of the chamber to form a 3D structure. The grid functions as a carrier for the substrate which takes the form of discrete particles. Preferably the grid openings are somewhat smaller than the size of the substrate particles, and the distance between sequential grids is somewhat larger than the size of the substrate particles to permit a limited movement when the chamber is moving from the desorption mode to the CO₂ adsorption mode. The use of such grids with adsorbent particles supported by it presents the advantage that pressure drop over the active chamber may be minimized in the course of the CO₂ adsorption step where a CO₂ containing gas is flown through the active chamber and through the CO₂ adsorption substrate.

Another example of a suitable CO₂ adsorption substrate is a porous monolithic structure, made of a porous CO₂ adsorbent or a material coated with or carrying a porous CO₂ adsorbent. The monolith geometry will generally consist of an integral bundle of parallel channels, which may for example resemble a honeycomb structure or a cylinder or any other shape comprising parallel channels. It provides a high surface area to volume ratio with a low pressure drop. Its pen structure offers minimal resistance to gas transport. The use of a monolith structure permits ensuring a substantially lower bed pressure drop than that observed with the use throughout the bed of conventional forms of adsorbents (e.g. beads). In addition, the use of a monolith structure eliminates any concerns regarding fluidization of the adsorbent bed when operating at high gas flow rates.

Monolith adsorbent wheels or cylinders may be fabricated by methods known to those of ordinary skills in the art. Sheet material used to produce the monolith may be fabricated by providing alternating layers of flat and corrugated adsorbent materials. Typically, the monolith may be formed by winding a sheet or web of corrugated adsorbent paper about a hub until a multilayered adsorbent monolith layer is built up to the desired diameter and configuration. In an embodiment, the monolith has a diameter that is substantially the same as the diameter and configuration of the active chamber. In another embodiment of the present invention, the monolith is formed by winding a sheet or web of corrugated adsorbent carrier material having at least one flat sheet of adsorbent material bonded to at least one side.

Such monolithic structures and ways for producing them are well known to the skilled person.

It may be attractive to include a high thermal conductivity material in the CO₂ adsorption substrate, in particular in the monolith to help alleviate "cold spots" form the adsorption bed. For example, a small amount (e.g. 1 to 2 wt. %) of a high thermal conductivity material such as copper, stainless steel powder a.o. may be incorporated in the sheet or other material used to manufacture the monolith. Alternately, a porous thin sheet of stainless steel mesh may be utilized as a substrate onto which one coats or impregnates the adsorbent material during formation of the monolith structure. A small amount of thermally conductive powder may allow for faster heat transfer through the CO₂ adsorption substrate thereby reducing the risk to the occurrence of problems due to the formation of cold spots.

The porous CO₂ adsorption substrate 11-14 may be positioned in an active chamber 1, 2, 3, 4 as such. According to a preferred embodiment, the porous CO₂ adsorption substrate is positioned in a container which is then positioned in the active chamber so that a larger variety of substrate shapes can be used. The form and dimensions of the containers are not critical to the invention, and will usually be adapted to the form of the chamber in which positioning is envisaged. Preferably however cylindrically shaped containers are used.

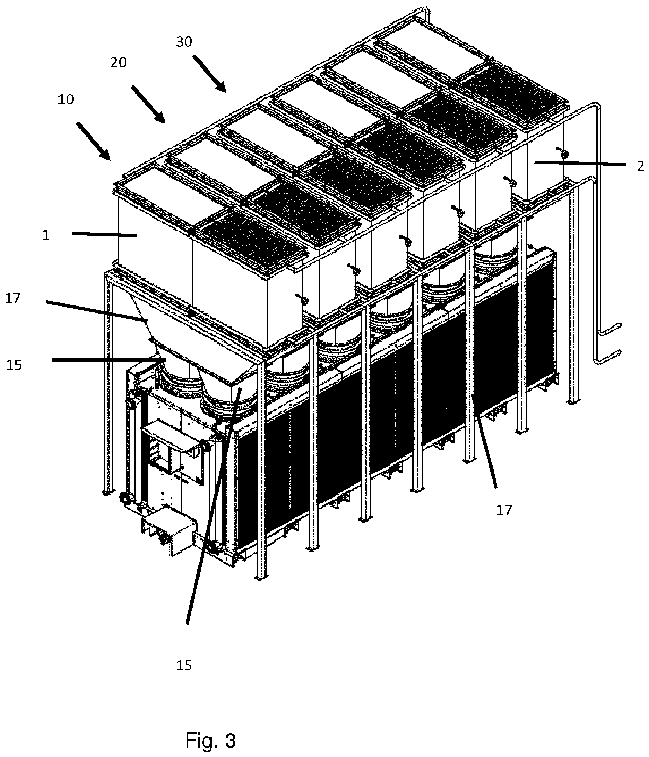

The system 25 of this invention may comprise one single housing 10 which contains one single set of a first, second chamber 1, 2. If so desired, the system may comprise two or more of such housings 10 as is shown in figure 3, in order to increase the capacity of the system. In a different embodiment, the system 25 of this invention may comprise one single housing 10 which contains one single set of a first, second, third and fourth chamber 1, 2, 3, 4. In a further embodiment, the system 25 of this invention may comprise one single housing 10 which contains one single set of a first, second, third, fourth, fifth and sixth chamber, or a single set of a first, second and third chamber. If so desired, the system may comprise two or more of such housings 10.

For supplying the CO₂ containing gas to the active chambers, use can be made of a conventional gas supply system, for example a volumetric system delivering a selected volume of gas per time unit or a pressure system delivering a certain gas pressure per time unit.

The pressure in the adsorption chamber during CO₂ adsorption may vary within quite broad ranges, but in order to not put too high demands to the system the pressure will generally not be higher than 6 X 10³ Pa, and is preferably maintained around atmospheric pressure 3 X 10³ Pa.

Operation of the above described system, may be carried out as follows.

In a system containing two active chambers, the controller is arranged for connecting first chamber 1 to gas supply 17 so that the CO₂ containing gas may be supplied to the CO₂ adsorption substrate 11 contained therein and at least part of the CO₂ contained in the gas may be absorbed by substrate 11. The first chamber 1 may therefore usually be designed to permit a gas flow through the first chamber 1. The controller may further be arranged to maintain the first CO₂ adsorption substrate at a desired temperature for optimizing CO₂ adsorption. The first chamber 1 will usually be operated in the flow-through mode where CO₂ containing gas is flowing through the chamber and through the adsorption substrate.

The controller is arranged for maintaining temperature in the first chamber such that CO₂ adsorption by the porous CO₂ adsorption substrate 11 may be maximized. This temperature may vary with the nature of the CO₂ adsorption substrate. In order to optimize energy consumption by the system, the temperature in the first chamber will usually be maintained between 0 °C and 30 °C, preferably between 5 °C and 25 °C.

In a system containing two active chambers as long as the first chamber is involved in CO₂ adsorption, the controller will be arranged to permit regeneration of the second CO₂ adsorption substrate 12 contained in the second chamber 2 by desorption of the adsorbed CO₂. First any non-adsorbed gas contained in the chamber may be removed by subjecting the second chamber to a pressure reduction. After the pressure has been reduced to a desired level, the temperature of the CO₂ adsorption substrate will be increased to a temperature which causes CO₂ desorption from the CO₂ adsorption substrate to a desired degree. This will usually be carried out with the second chamber closed off from the gas supply member and connected to the CO₂ collector, so that any desorbed CO₂ may be removed from the active chamber upon desorption and the risk to over-pressurization of the active chamber may be minimized. CO₂ desorption may be supported or promoted by subjecting the second chamber to a pressure reduction as is described above. The temperature maintained in the second chamber is preferably selected such that CO₂ desorption by the porous CO₂ adsorption substrate 15 may be maximized. This temperature may vary with the nature of the CO₂ adsorption substrate. In the present invention, during the CO₂ desorption step, typically the temperature in the second chamber 2 is maintained between 50 °C and 125 °C. It shall be clear to the skilled person that this temperature may be higher or lower depending on the nature of the CO₂ adsorption substrate.

In the preferred embodiment where the system comprises a third chamber 3, the temperature of the CO₂ adsorption substrate may be maintained a CO₂ desorption temperature, which may be the same as the temperature maintained in the second chamber. Thereby the third chamber will usually be closed off from the gas supply member and connected to the CO₂ collector, to permit collecting CO₂ as soon as it is desorbed from the substrate. The temperature maintained in the third chamber is preferably the same as in the second chamber, although a higher temperature may be selected as well to maximize CO₂ desorption. Typically the temperature in the third chamber 3 is maintained between 50 °C and 125 °C. In a preferred embodiment, the third chamber 3 comprises a connecting member for connecting to or closing off the third chamber 3 from the CO₂ containing gas supply and a connecting member for connecting the third chamber to or closing it off from the CO₂ collector.

Many types of CO₂ collectors may be used. CO₂ extraction may for example take place using a forced extraction, for example by causing a flow of a CO₂ poor gas through the active chamber involved, in which case one side of the active chamber will be connected to a gas supply and the other side will be connected to the CO₂ collector. CO₂ extraction may alternatively be achieved by connecting the active chamber 3 to a vacuum pump or any other technique considered suitable by the skilled person, in which case the third chamber will contain a closure member for closing the third chamber when no CO2 evacuation is carried out and an exit along which CO₂ may be extracted from the adsorption structure and from the third chamber 3 to flow into the CO₂ collector. Nevertheless, unforced CO₂ extraction may be used as well, for example by connecting an exit of the third chamber to the CO₂ collector, along which CO₂ is permitted to flow into the CO₂ collector. In order to permit recovering CO₂ from the third chamber to the best possible extent, the third chamber 3 or the container positioned therein may be heated.

The system of this invention may further comprise a fourth chamber 4, which in the execution of the process described above will be subjected to cooling for cooling the CO₂ adsorption substrate located therein to a temperature at which the CO₂ adsorption substrate is in a condition to permit CO₂ adsorption. According to a preferred embodiment the fourth chamber 4 may be connected to a cooling device, in particular a heat exchange device for cooling the CO₂ adsorption structure to a CO₂ adsorption temperature which will usually be lower than a temperature at which CO₂ is caused to desorb from the structure. Usually in the fourth chamber the CO₂ adsorption substrate will be cooled to a temperature close to that of the first chamber 1. In order to promote cooling, the fourth chamber may be subjected to a gas flow. Thereby a gas which is substantially free of CO₂ may be used, or a CO₂ containing gas may be used.

According to another embodiment, the fourth chamber 4 may be connected to a desorption gas flow supply for supplying a cooling gas flow to the porous substrate 15. The fourth chamber 4 is preferably be open to permit a gas to flow through and achieve faster cooling.

Generally, a longer time will be needed to achiever adsorption of CO₂ from the gas supply than the time needed for the desorption or release of the CO₂ in the regeneration step. The time needed to achieve adsorption will depend on the nature of the porous CO₂ adsorption substrate. Similarly, the time needed to achieve desorption and regeneration will also depend on the nature of the porous CO₂ adsorption substrate. However, adsorption and regeneration time will usually be different, and the adsorption time needed to achieve a certain loading of the substrate with CO₂ will usually be larger than the time needed to achieve desorption. The ratio of the adsorption time to the desorption time may vary within wide ranges and will depend on the nature of the substrate. To account for the difference in adsorption and desorption time, the residence time of the substrate in the first chamber 1 for CO₂ adsorption may be different from the residence time in the in the second 2 and any further chambers 3, 4 used for substrate regeneration and CO₂ desorption. In an example the residence time of the substrate in the first chamber may be 20 times, preferably 10 times, more preferably 5 times, most preferably 3 times or 2 times the residence time in the second chamber 2. A desired residence time may be achieved according to many ways known to the skilled person, for example by an appropriate choice of the dimensions of each of the chambers, by adapting the speed with which the substrate is moved through each individual chamber, or by providing two or more chambers of the same type in sequence. For example, the residence time in the first chamber may be doubled by providing two consecutive chamber of the first type.

The residence time of the CO₂ adsorption structure in the second, third and fourth chamber may be the same or different, but will preferably be the same.

In a method of the present invention, the CO₂ containing gas is supplied alternatingly to each one of the solid CO₂ adsorption substrates, which adsorption substrate is maintained at a CO₂ adsorption temperature when supplying the CO₂ containing gas and is disconnected from the CO₂ collector. Simultaneously at least one of the remaining CO₂ adsorption substrates is maintained at a temperature at which CO₂ desorption takes place and is connected to the CO₂ collector so as to collect CO₂ desorbed from the substrate. In a preferred embodiment, the active chamber involved in CO₂ desorption is subjected to a pressure reduction as described above. The CO₂ adsorption substrate consecutive to the substrate maintained at a CO₂ adsorption temperature, is disconnected from the gas supply member, after which gas remaining in the active chamber is removed and the adsorption substrate is heated to a CO₂ desorption temperature. In a preferred embodiment, this active chamber is subjected to a pressure reduction as described above. The CO₂ adsorption substrate consecutive to the substrate maintained at the CO₂ desorption temperature is disconnected from the gas supply member and cooled to a CO₂ adsorption temperature, and preferably disconnected from the CO₂ collector. In a preferred embodiment, a flow of a gas substantially free of CO₂ or a CO₂ containing gas may be flown through this active chamber to promote heat transfer.

From the above it shall be clear that the active chambers may be subjected to both a temperature and a pressure swing to provide optimum conditions for CO₂ adsorption and desorption.

## Claims

1. A system for capturing CO₂ from a CO₂ containing gas, wherein the system comprises
- a housing with at least two consecutive active chambers which are separated from each other, wherein each active chamber contains a CO₂ adsorption substrate capable of selectively adsorbing CO₂,
- a first connecting member connecting a CO₂ containing gas capturing device to at least one of the active chambers,
- a second connecting member connecting a CO₂ collector to at least one of the active chambers,
- a controller which is arranged to alternatingly open and close the first connection of the active chambers to the gas supply member and to alternatingly open and close the second connection to the CO₂ collector in such a way that an active chamber that is connected to the gas supply member is disconnected from the CO₂ collector and at least one of the active chambers is connected to the CO₂ collector.

2. A system as claimed in claim 1 containing maximum six, preferably maximum four active chambers.

3. A system as claimed in claim 1 or 2, wherein the consecutive active chambers are positioned in a closed loop, which preferably takes a fixed position.

4. A system as claimed in any of the previous claims, wherein the active chambers are provided with a heat exchange device.

5. A system as claimed in claim 4, wherein the controller is arranged for actuating the heat exchange device for heating the active chamber to a CO₂ desorption temperature when the connection of the active chamber to the gas supply member is closed.

6. A system as claimed in claim 4 or 5, wherein the controller is arranged for actuating the heat exchange device for cooling the active chamber to a CO₂ adsorption temperature after the active chamber has been maintained at a desorption temperature for a certain period of time.

7. A system as claimed in any one of claims 3-6, wherein the heat exchange device extends along at least part of a circumferential wall of the active chamber.

8. A system as claimed in any one of the previous claims, wherein at least part of a circumferential wall of the active chamber is heat insulated.

9. The system according to any one of the previous claims, wherein the gas supply member is connected to a CO₂ containing gas capturing device, preferably one or more selected from the group of a fan, an airconditioning system, a ventilation system, a gas exhaust of an industrial production installation, etc.

10. The system according to any of the previous claims, wherein the active chambers are mounted into a closed housing, which is connected to the gas supply member and to the CO₂ collector.

11. The system according to claim 10, wherein the system comprises multiple housings.

12. The system according to any of the previous claims, wherein the controller is arranged for alternatingly
- maintaining a temperature of a first one of the active chambers at a CO₂ adsorption temperature with the chamber connected to the gas supply member,
- heating a consecutive second chamber to a CO₂ desorption temperature with the chamber disconnected from the gas supply member,
- maintaining a consecutive third chamber at a CO₂ desorption temperature with the chamber connected to the CO₂ collector and disconnected from the gas supply member,
- cooling a fourth consecutive chamber to a CO₂ adsorption temperature with the chamber disconnected from the gas supply member.

13. A method for capturing CO₂ from a CO₂ containing gas, preferably ambient air, wherein the CO₂ containing gas is supplied alternatingly to at least one CO₂ adsorption substrate of a system according to any one of the previous claims, which adsorption substrate is maintained at a CO₂ adsorption temperature when supplying the CO₂ containing gas and is disconnected from the CO₂ collector, wherein at least one of the remaining CO₂ adsorption substrates is maintained at a temperature at which CO₂ desorption takes place and is connected to the CO₂ collector so as to collect CO₂ that has been desorbed from the substrate.

14. A method as claimed in claim 13, wherein a CO₂ adsorption substrate present in an active chamber consecutive to the CO₂ adsorption substrate maintained at a CO₂ adsorption temperature, is heated to a CO₂ desorption temperature, and is subjected to a pressure reduction to evacuate non-adsorbed gas and non-adsorbed CO₂ remaining in the active chamber and CO₂ that has been desorbed from the CO₂ adsorption substrate.

15. A method as claimed in claim 13 or 14, wherein the CO₂ adsorption substrate consecutive to the substrate maintained at the CO₂ desorption temperature is connected to the gas supply member and cooled to a CO₂ adsorption temperature, and is preferably disconnected from the CO₂ collector.
